# EUROPEAN PATENT APPLICATION

(11) **EP 0 952 017 A2**
(43) Date of publication of application: **27.10.1999**
(21) Application number: 99610029.3
(22) Date of filing: 21.04.1999
(51) Int. Cl.: B60H 1/22, B60H 1/00

(54) **A heat exchanger device for an air conditioning system**

(30) Priority: 22.04.1998 DK 56098
(71) Applicant: Climcon A/S, 2970 Horsholm (DK)
(72) Inventor: Bryrup, Niels Poul, 2960 Rungsted (DK)
(74) Representative: Vingtoft, Knud Erik

(57) **Abstract**

A heat exchanger device for an air conditioning system are composed by a central first heat exchanger element (12) and a pair of outer second heat exchanger elements (11), which define one or more flow passages (18) for heat transporting liquid. A plurality of thermoelectric units (17) are arranged in side-by-side relationship and sandwiched between each of the outer second heat exchanger elements (11) and the central first heat exchanger element (12) such that heat is transferred from the central first element to each of the outer second elements. The flow passages (18) may be formed by inserts (19,20), which are made from sheet metal and arranged in cavities defined in the heat exchanger elements. Each insert (19,20) may have a wavy cross-sectional shape, and the flow passages may extend in the longitudinal direction of the wave formations.

## Description

The present invention relates to a heat exchanger device for an air conditioning system for cooling air in smaller rooms, such as vehicle cabins.

Such heat exchanger device, which is of the type disclosed in WO 97/22486, comprises heat exchanger elements each defining one or more flow passages for heat transporting liquid, and a plurality of thermo-electric units, such as Peltier elements, arranged in side-by-side relationship and being sandwiched between the heat exchanger elements so as to be in heat conductive contact therewith.

When such heat exchanger elements are used for cooling cabins in cars or other vehicles where the available space is rather limited it is important to minimise the space required for installation of the heat exchanger device.

This may be obtained by the heat exchanger device according to the present invention, which is characterized in comprising a central first heat exchanger element and a pair of outer second heat exchanger elements, the thermo-electric units being arranged between each of the outer second heat exchanger elements, and the central first heat exchanger element such that heat is transferred from the central first element to each of the outer second elements. Such a heat exchanger device having two layers of thermo-electric units may be made much more compact than a similar device of the known type having a corresponding capacity.

A further object of the invention is to increase the efficiency of a heat exchanger device of the above type so as to maximise the cooling capacity of the heating device in relation to the power consumption. Thus, the present invention further provides a heat exchanger device for an air conditioning system, said heat exchanger device comprising first and second heat exchanger elements each defining a plurality of flow passages for heat transporting liquid therein, and a plurality of thermo-electric units arranged in side-by-side relationship and being sandwiched between the first and second heat exchanger elements, and the heat exchanger device according to the invention is characterized in that the flow passages are formed by inserts, which are made from sheet metal and arranged in cavities defined in the heat exchanger elements.

It has been found that the cooling capacity of a heat exchanger device of the type in question decreases drastically when the difference in temperature of the heat transporting liquid flowing through the first and second heat exchanger elements, respectively, increases. Thus, the cooling capacity will be reduced to almost zero if said temperature difference is 60-70°C. The power consumption of the heat exchanger device is substantially independent of the said temperature difference. Therefore, in order to optimise the efficiency of the heat exchanger device the temperature differencies between the heat transfer surfaces and the liquids should be kept as small as practically possibly. This means that the heat exchanger device should be able to remove a relatively high heat load, e.g. 80-100 kW per square meter at a small temperature difference, such as less than 5-8°C and with a moderate pressure loss.

These requirements may be met by the heat exchanger device according to the invention allowing a very efficient heat transfer between the heat transporting liquid flowing through the heat exchanger elements and the thermo-electric units which are sandwiched between these elements.

Also when the thermo-electric units are arranged in two layers each of which are sandwiched between a central first heat exchanger element and an outer second heat exchanger element, the flow passages of the heat exchanger elements may be formed by inserts, which are made from sheet metal and arranged in cavities defined in these elements.

The inserts may be formed e.g. by pressing and/or stamping, from sheet metal with good thermal conductivity, such as stainless steel, copper, brass, aluminum, silver, or alloys thereof. As an example, each insert may have a wavy cross-sectional shape and the flow passages may then extend in the longitudinal directions of such wave formations. In a specially preferred embodiment each wave formation is divided into wave sections extending in the longitudinal direction of the flow passages formed thereby, consecutive wave sections being transversely offset.

It has been found that an increase in height of the wavy formations of such wavy inserts tends to reduce the efficiency of the heat exchanger device. However, the efficiency may be increased when two or more inserts are stacked on top of each other in each of said cavities, so as to define flow passages in two or more layers. In order to reduce the height of the flow passages defined by the stacked inserts a pair of transversely adjacent wave crests of one wavy insert may be arranged in abutting engagement with the bottom surface of a wave trough of an adjacent wavy insert so as to define a plurality of coextending flow passages in two or more layers.

The heat exchanger elements may have an inlet and an outlet for heat transporting liquid positioned at opposite ends or sides of the heat exchanger elements. In that case the flow passages may extend substantially rectilinear between manifold chambers communicating with the inlet and outlet, respectively. However, for some applications it may be desirable to have the inlet and the outlet for heat transporting liquid positioned at the same side of at least one of the heat exchanger elements. The flow passages may then comprise a first section communication with the inlet, a second section substantially co-extending with the first section, and a connecting section interconnecting the inlet and outlet sections.

In principle, the heat exchanger elements may have any suitable shape, such as triangular, quadrangular, hexagonal, circular or elliptical. In the preferred embodiment each heat exchanger element has an elongated, preferably rectangular shape. Thus, each heat exchanger element may have a block-like shape.

As an example, each heat exchanger element may comprise a rectangular frame part defining opposite, plane sealing surfaces, and a pair of cover members for sealingly engaging with the sealing surfaces of the frame member so as to define a cavity between the cover members. In the preferred embodiment, however, at least one of the heat exchanger elements comprises a flat heat exchanger body having side surfaces, said cavity being formed by a depression or recess formed in said side surface, and a cover member covering and sealing said depression or recess.

When the heat exchanger elements have a rectangular or a similar shape, the connecting section of the flow passages may extend substantially at right angles to the first and second sections. Furthermore, the liquid inlet and outlet may be connected to first and second flow passage sections, respectively, via connecting passages extending transversely to the inlet and outlet which extend in substantially the same direction as the inlet and outlet sections of the flow passages.

The inserts may comprise insert sections relating to the first, the second, and the connecting flow passage sections, respectively, and adjoining edges of an insert section relating to the inlet and/or outlet flow passage section(s) and of an insert section relating to the connecting flow passage section may then form an acute angle with the direction of the flow passages defined by the respective flow passage section. Thus, by suitably cutting insert sections on the bias it is possible to define flow passage sections forming a desired angle, such as 90°, therebetween. Thus, said adjoining edges may form complementary angles with the respective flow passage direction so as to change the flow passage direction by about 90°.

The invention will now be further described with reference to the drawings, wherein
Fig. 1 is a plan view of a first embodiment of the heat exchanger according to the invention, an upper cover portion having been removed,
Fig. 2 is a side view of the embodiment shown in Fig. 1,
Fig. 3 is a plan view corresponding to that shown in Fig. 1 of a second embodiment of the heat exchanger device according to the invention,
Fig. 4 is a side view of the embodiment shown in Fig. 3,
Figs. 5 and 6 are plan views of heat exchanger elements of a third embodiment of the heat exchanger device according to the invention, the cover part having been removed,
Fig. 7 is an enlarged fragmentary sectional view showing the shape of an insert arranged within a heat exchanger element of the heat exchanger device,
Fig. 8 is a fragmentary cross-sectional view showing inserts of the type shown in Fig. 7 stacked on top of each other, and
Fig. 9 is a diagram illustrating an air conditioning system comprising a heat exchanger device according to the invention.

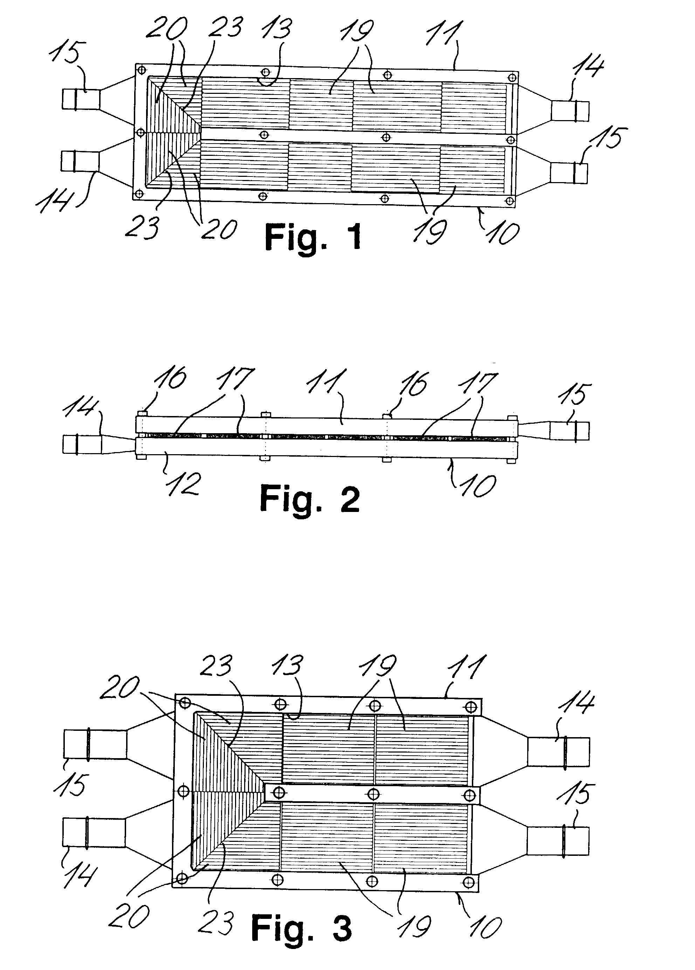

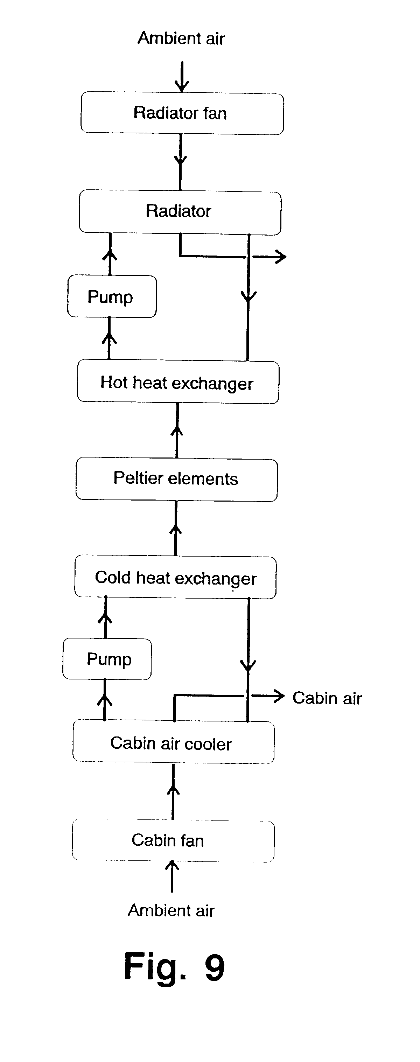

Figs. 1 and 2 diagrammatically illustrate a heat exchanger device 10 which may be used in an air conditioning system for cars or other vehicles, such as an air conditioning system of the type disclosed in WO 97/22486 and also diagrammatically illustrated in Fig. 9. The exchanger device 10 comprises a pair of plate-like elements 11 and 12 made from metal, such as aluminium. A shallow U-shaped depression or recess 13 is formed in a side surface in each of the elements 11 and 12, and the depression may be covered by a cover plate, not shown, so as to define a cavity within each of the heat exchanger elements 11 and 12. Each heat exchanger element 11, 12 has an inlet 14 and an outlet 15 for a heat transferring liquid, which may, for example, be water containing an antifreeze additive or another aqueous liquid having a suitably low freezing point. Each inlet 14 and outlet 15 communicates with a respective free end of the U-shaped depression 13 or cavity formed within the heat exchanger element.

In the embodiment shown in Figs. 1 and 2 a pair of such heat exchanger elements are clamped together by means of bolts 16 or other releasable fastening means. An arrangement of a plurality of plate-like Peltier elements 17 are sandwiched between the cover plates of the heat exchanger elements 11 and 12 in the same manner as described in WO 97/22486 also referred to above. Thus, the heat exchanger device shown in Figs. 1 and 2 corresponds to that disclosed in WO 97/22486 with reference to Figs. 2-6 in this prior international application, apart from the manner in which liquid flow passages have been defined within each of the heat exchanger elements 11 and 12 of the heat exchanger device 10.

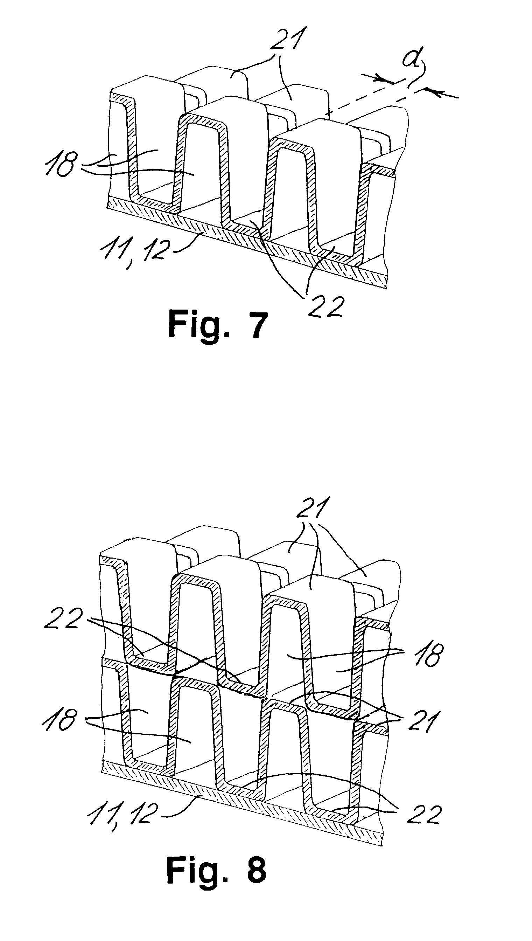

In the heat exchanger device according to the invention a plurality of coextending flow passages 18 extending from the liquid inlet 14 to the outlet 15 have been defined within the U-shaped depression 13, vide Figs. 7 and 8. The coextending flow passages 18 are defined by means of separate insert sections 19, 20 made from sheet metal with a good heat conductivity, such as copper or a copper alloy. As best shown in Figs. 7 and 8 the insert sections may have a wavy cross-sectional shape having wave crests 21 and valleys 22. As shown in Figs. 7 and 8 the crests 21 of each insert section 19 and 20 may be divided into consecutive lengths which are transversely offset by a spacing "d" whereby the efficiency of the heat exchanger device may be improved. Alternatively, other kinds of insert sections may be used, such as the so-called louvered plate-fin inserts.

As shown in Fig. 1, the insert sections 20 may have the shape of a right-angled triangle. At the adjoining hypotenuses 23 the direction of the flow passages defined is shifted 90° twice whereby the flow direction is reversed.

In the embodiment shown in Figs. 1 and 2 the heat exchanger element 11 may be the "hot heat exchanger" and its inlet 14 and outlet 15 may be connected to the radiator of a car, vide the diagram shown in Fig. 9. The heat exchanger element 12 may then be the "cold heat exchanger" having its inlet and outlet connected to the cabin air cooler shown in Fig. 9.

In the following description of alternative embodiments of the heat exchanger device according to the invention parts and elements corresponding to those shown in Figs. 1 and 2 have been designated the same reference numerals.

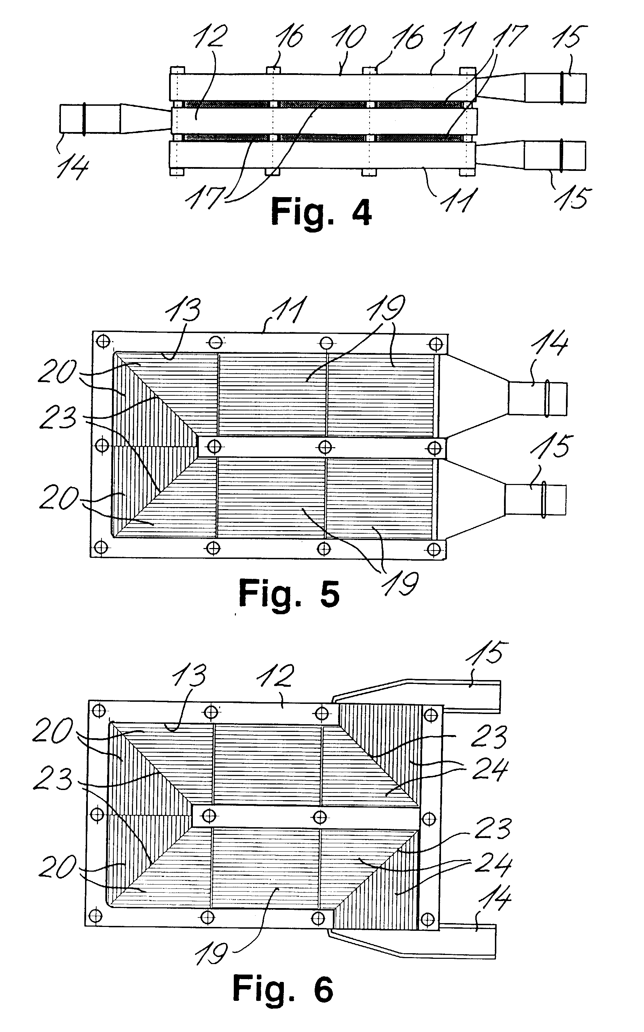

Figs. 3 and 4 illustrate a modified embodiment of the heat exchanger device 10 which is more compact than that shown in Figs. 1 and 2. The heat exchanger device shown in Figs. 3 and 4 comprises a single centrally arranged "cold" heat exchanger element 12 and two outer "hot" heat exchanger elements 11, and an arrangement of Peltier elements 17 is sandwiched between the central heat exchanger element 12 and each of the outer heat exchanger elements 11. Each of the heat exchanger elements 11 and 12 includes a cavity with insert sections arranged substantially in the same manner as described in connection with Figs. 1 and 2 and as shown in Fig. 3. The cold side of the Peltier elements 17 in each arrangement is in contact with the central heat exchanger element 11 while the warm side of the Peltier elements 17 are in contact with the outer heat exchanger elements 11. The inlet and outlet of the central heat exchanger element 12 are connected to the cabin air cooler (Fig. 9) and the two heat exchanger elements 11 may be connected in parallel, but are preferably connected in series with the radiator of the car.

In the embodiment shown in Fig. 4 liquid inlets 14 and outlets 15 are extending in opposite directions. For installation reasons it may be desirable to have the inlets and outlets extending in one direction, only. This may be obtained by reversing the central heat exchanger element 12 and bending the inlets 14 and the outlets 15 of the outer heat exchanger elements 11 slightly outwards. Alternatively, it may be obtained by replacing the central heat exchanger element 12 in the heat exchanger device shown in Fig. 4 by a heat exchanger element as that shown in Fig. 6. The outer heat exchanger elements 11 may be of the type shown in Fig. 3 and also as illustrated in Fig. 5. As shown in Fig. 6 the transverse spacing of the liquid inlet 14 and outlet 15 has been increased so that the inlet and outlet communicate with the flow passages at opposite sides of the heat exchanger element 11. This has been obtained by shifting the flow direction 90° in a manner previously described.

It has been found that the single most important parameter relating tog the geometry of the wavy insert sections 19 and 20 is the spacing "d" shown in Fig. 7. and that the optimal value is 0.8-1.2 mm or about 1 mm. The height and the length of the waves or fins of the insert sections 19 and 20 are of much less importance. An increased height gives rise to not only a larger heat transfer area, and also to a reduction in pressure drop. However, for variations of the height between, say 4 and 12 mm, the total efficiency of the entire air conditioning system is hardly changed. The explanation is that an increased height and a consequently increased heat transfer surface tend to reduce the fin efficiency of the wavy surface which even for relatively low waves hardly exceeds a value of 0.3 due to very high heat transfer coefficients (up to some 10,000 W/m2K). For practical reasons the heights of the cavity defined within the heat exchanger elements should not be smaller than 6-10 mm. Therefore, it may be advantageous by stacking two (Fig. 8) or more layers of inserts on top of each other. As shown in Fig. 8 the inserts are preferably arranged such that the valleys or troughs 22 of an upper insert is engaging with a pair of adjacent crests 21 of a lower insert so as to define two layers of flow passages 18. As an example, six Peltier elements may be arranged in side-by-side relationship and sandwiched between the "cold" central heat exchanger element 12 and each of the outer "hot" elements 11.

It should be understood that various amendments and modifications of the embodiments described above may be made within the scope of the present invention. The present invention is an improvement of the heat exchanger device disclosed in applicants international patent application WO 97/22486 which is hereby included herein by reference.

## Claims

1. A heat exchanger device for an air conditioning system, said heat exchanger device comprising heat exchanger elements each defining one or more flow passages for heat transporting liquid, and a plurality of thermoelectric units arranged in side-by-side relationship and being sandwiched between the heat exchanger elements so as to be in heat conductive contact therewith,
characterised in comprising a central first heat exchanger element and a pair of outer second heat exchanger elements, the thermoelectric units being arranged between each of the outer second heat exchanger elements and the central first heat exchanger element such that heat is transferred from the central first element to each of the outer second elements.

2. A heat exchanger device for an air conditioning system, said heat exchanger device comprising first and second heat exchanger elements each defining a plurality of flow passages for heat transporting liquid therein, and a plurality of thermoelectric units arranged in side-by-side relationship and being sandwiched between the first and second heat exchanger elements,
characterised in that the flow passages are formed by inserts, which are made from sheet metal and arranged in cavities defined in the heat exchanger elements.

3. A heat exchanger device according to claim 2 and comprising a central first heat exchanger element and a pair of outer second heat exchanger elements, the thermoelectric units being arranged between each of the outer second heat exchanger elements and the central first heat exchanger element such that heat is transferred from the central first element to each of the outer second elements.

4. A heat exchanger device according claim 1, wherein the flow passages are formed by inserts, which are made from sheet metal and arranged in cavities defined in the heat exchanger elements.

5. A heat exchanger device according to any of the claims 2-4, wherein each insert has a wavy cross-sectional shape, the flow passages extending in the longitudinal direction of the wave formations.

6. A heat exchanger device according to claim 5, wherein each wave formation is divided into wave sections extending in the longitudinal direction of the flow passages formed thereby, consecutive wave sections being transversely offset.

7. A heat exchanger device according to any of the claims 2-6, wherein two or more inserts are stacked on top of each other in each of said cavities so as define flow passages in two or more layers.

8. A heat exchanger device according to any of the claims 5-7, wherein a pair of transversely adjacent wave crests of one wavy insert are in abutting engagement with a wave trough of an adjacent wavy insert so as to define a plurality of coextending flow passages in two or more layers.

9. A heat exchanger device according to any of the claims 1-8, wherein at least one of the heat exchanger elements comprises an inlet and an outlet for heat transporting liquid positioned at the same side of the heat exchanger element, the flow passages comprising a first section communicating with the inlet, a second section substantially coextending with the first section, and a connecting section interconnecting the inlet and outlet sections.

10. A heat exchanger device according to any of the claims 1-9, wherein each heat exchanger element has an elongated, preferably rectangular shape.

11. A heat exchanger device according to any of the claims 1-10, wherein each heat exchanger element has a flat, block-like shape.

12. A heat exchanger device according to any of the claims 2-11, wherein at least one of the heat exchanger elements comprises a flat heat exchanger body having a side surface, said cavity being formed by a depression or recess formed in said side surface, and a cover member covering and sealing said depression or recess.

13. A heat exchanger device according to any of the claims 9-12, wherein the connecting section of the flow passages extends substantially at right angles to the first and second sections.

14. A heat exchanger device according to any of the claims 9-13, wherein the inlet and the outlet are connected to the first and second flow passage sections, respectively, via connecting passages extending transversely to the inlet and outlet which extend in substantially the same direction as the inlet and outlet sections of the flow passages.

15. A heat exchanger device according to any of the claims 9-14, wherein the inserts comprise insert sections relating to the first, the second, and the connecting flow passage sections, respectively, adjoining edges of an insert section relating to the inlet and/or outlet flow passage section(s) and of an insert section relating to the connecting flow passage section forming an acute angle with the direction of the flow passages defined by the respective flow passage section.

16. A heat exchanger device according to claim 15, wherein said adjoining edges form complementary angles with the respective flow passage direction so as to change the flow passage direction by about 90o.

17. A heat exchanger device according to claim any of the claims 1-16, for use in an air conditioning system for a vehicle cabin.
